# EUROPEAN PATENT SPECIFICATION

(11) **EP 3 050 858 B1**
(45) Date of publication and mention of the grant of the patent: **01.11.2023**
(21) Application number: 14795844.1
(22) Date of filing: 22.09.2014
(51) Int. Cl.: C04B 28/00, C04B 35/043, C04B 35/10, C04B 35/63, C04B 35/634, C04B 35/66

(54) **A METHOD FOR LINING METALLURGICAL VESSELS USING SELF HARDENING REFRACTORY MATERIAL**
VERFAHREN ZUR AUSKLEIDUNG METALLURGISCHER BEHÄLTER MIT SELBSTHÄRTENDEM FEUERFESTEM MATERIAL
PROCEDE DE REVÊTEMENT DE CUVES METALLURGIQUES UTILISANT UN MATERIAU REFRACTAIRE AUTODURCISSANT

(30) Priority: 23.09.2013 ES 201331379
(43) Date of publication of application: 03.08.2016
(73) Proprietor: Magnesitas Navarras S.A., 31630 Zubiri (ES)
(72) Inventor: AMEZQUETA LIZARRAGA, Presentación, E-31630 Zubiri (Navarra) (ES); ARANDIGOYEN VIDAURRE, Mikel, E-31630 Zubiri (Navarra) (ES); FERNÁNDEZ SUÁREZ, Jesús, E-31630 Zubiri (Navarra) (ES); GANGUTIA PEPÍN, Nicolás, E-31630 Zubiri (Navarra) (ES); GARCÍA ZUBIRI, Íñigo Xabier, E-31630 Zubiri (Navarra) (ES)
(74) Representative: Pons
(86) International application number: PCT/ES2014/070715
(87) International publication number: WO 2015/059324

(56) References cited:
- EP-A1- 0 579 994
- EP-A2- 0 202 004
- EP-B1- 1 984 133
- GB-A- 832 858
- GB-A- 1 017 745
- GB-A- 1 137 842
- GB-A- 1 360 183
- GB-A- 1 479 260
- GB-A- 2 154 593
- US-A- 3 879 208
- US-A- 5 043 412
- US-A- 5 179 177

## Description

The present invention relates to a method for lining metallurgical vessels used in foundries or steelworks with a self-hardening refractory composition.

Therefore, the invention may fit within the field of steelworks and foundries.

### BACKGROUND ART

90 % of steel production worldwide is carried out by means of the continuous casting process, wherein the tundish or the crucible is the last vessel to hold the molten steel before it solidifies in a mold. The working lining of the tundish or the crucible is in direct contact with the molten steel and its slag, meaning it must be the most resistant part, with the best features and, on the whole, offer the best protection for the same. Because of continuous casting processes and the variables they involve, such as steel quality, this working lining must be replaced much more frequently than the safety linings that also form part of the refractory lining of tundishes or crucibles. Other metallurgical vessels that are in direct contact with molten metals or steel, and which also require working linings with specific protective properties are ladles, vats, runners, pots, slag outlets, etc.

Current vessel-lining methods used in steelworks or foundries can be divided up based on how they are incorporated or applied in the metallurgical vessel. There are wet processes, especially spraying (ES2087727), and dry processes (WO9117969).

For instance, US51791477 deals with retarding of self-hardening compositions comprising a wet mixture of magnesia aggregate, 3-15 % of a phenolic resin solution and a citrate as retarder compound in a quantity of 0.5-2.5 wt %.

GB1017745 refers to a mix of 93,46 pbw dead burnt MgO refractory material with silica, 1.77 pbw magnesium sulfate, water and 0.34 pbw citric acid for the production of refractories for use in iron, steel and copper furnaces.

GB1360183 describes the preparation of an alumina-based refractory starting from water containing composition comprising 2-72 % wt alumina aggregate and among others 3 % wt Na-polyphosphate and 5 % wt citric acid.

GB832858 relates to a refractory suitable for use for crowns and wallings of various furnaces. In producing refractories by mixing a refractory material with hydrolysed ethyl silicate solution as binder the mixture is buffered at an acid pH to control the gelling time. The ethyl silicate, e.g. tetraethylortho-silicate or a mixture of ethyl polysilicates produced by reacting silicon tetrachloride with water or those of Specifications 722,425 and 674,137, is one which has been hydrolysed in the presence of a water-miscible alcohol e.g. ethyl or isopropyl alcohol, and an acid hydrolysing agent, e.g. hydrochloric acid, and is buffered in admixture with the refractory material which is preferably an oxide or silicate, e.g. zircon, alumina, flint, fireclay, or sillimanite, at a pH between 4,5 and 6,0, preferably between 5,0 and 5,8, with an aqueous buffer system e.g. citric acid/disodium hydrogen phosphate, sodium dihydrogen citrate/trisodium citrate or pyridine hydrochloride/pyridine and after gelation the hardened mass is fired.

US3879208 refers to a refractory composition suitable for forming a monolithic structure by ramming, gunning, or casting is made from sized refractory aggregate, preferably nonacid aggregate, containing at least 10% grain with an MgO content of at least 50% and passing a 100 mesh screen, together with aluminum sulfate, an organic acid or salt thereof, for example citric acid or a citrate, with or without the addition of a boron compound, preferably a soluble boron compound such as borax or boric acid.

EP0579994 describes monolithic refractories comprising 100 % by weight of refractory aggregate powders, and in addition thereto, based on the weight of said powders, 0.05 to 5 % by weight of a binder which is phosphate glass and/or oxycarbonate and 0.01 to 1 % by weight of a thickner, characterized in that said monolithic refractories have been kneaded with water or other kneading liquid. The monolithic refractories are capable of being applied without being kneaded at working sites.

GB1479260 refers to a refractory calcium aluminate cement comprises a mixture of (a) 40-60 wt. per cent ground cement clinker, at least 80 wt. per cent of which is in the CA phase, and (b) 60-40 wt. per cent of finely divided calcined alumina having a specific surface of 1-10 m.<SP>2</SP>/g., an average pore size of 0.05 to 0À5 microns, a specific pore volume of 0À1 to 0À5 c.c./g. and a brain coral morphology, at least 80 wt. per cent of the cement passing a 325 Tyler mesh screen. The cement may be made by admixing the cement clinker and calcined alumina and grinding the clinker and alumina before or after admixing. Grinding may be in the presence of a grinding aid, e.g. triethanolamine or naphthenic acid. Sodium citrate may control the rate of setting of the cement. Refractory aggregates may include calcined alumina, tabular alumina and porous aggregate.

GB1137842 refers to a mouldable refractory composition consists of (a) 1-10 wt. per cent water, (b) 1-8% of an acid of an oxide of phosphorus or a mixture thereof, (c) 1-8% of a polycarboxylic acid and (d) the balance being one or more refractory metal oxides, with or without 3- 15% of a refractory clay. The refractory oxide may be alumina, titania, chromia, hafnia or zirconia. The phosphorus acid may be ortho, pyro or meta-phosphoric acid or ortho, or pyro-phosphorus acid. Polycarboxylic acids specified are malonic, succinic, malic, maleic, fumaric, racemic, glutaric, adipic, citric, tricarballylic, phthalic, isophthalic, terephthalic, hemi-mellitic, trimellitic, trimesic, pyro-mellitic, mallophanic, prehnitic and mellitic acid. To line the metallurgical vessel by means of wet methods, a large amount of water is required as well as subsequent drying prior to use, which entails a high energy cost and excessive waiting times until the lining is ready for use.

Document EP1984133A1 describes a process for the production of a wear lining for casting ladles and pouring boxes used in foundry practice by introducing - e.g. in the gap between a mould inserted into the casting ladle or pouring box and its more permanent lining -a pourable mass consisting of the refractory material.

Dry lining methods reduce the energy cost since they do not require a drying phase; however, these linings are formed while hot using a mold and vibration, which entails an energy cost, and one time for heating and another to wait for the metallurgical vessel to cool after forming in order to remove the form.

Therefore, in order to overcome all of the aforementioned technical problems, it is necessary to develop a composition that does not require heating before or after forming, to be used as a working lining for metallurgical vessels and safety walls.

### DESCRIPTION OF THE INVENTION

The present invention relates to a method for lining metallurgical vessels used in foundries or steelworks with a self-hardening refractory composition.

In the present invention, the meaning of "self-hardening" is a material that hardens and/or is formed at room temperature, i.e. without the need for any heating whatsoever.

The term "metallurgical vessel" refers to any vessel for use in steelworks or foundries that requires a working lining in the present invention. Non-limiting examples of metallurgical vessels are tundishes, crucibles, runners, ladles, pots and vats.

In the present invention, the energy efficiency of the operation of applying the working lining, and the times for preparing the metallurgical vessel, are improved through the use of the self-hardening refractory composition of the invention, as the latter does not need to be heated at any point in the cycle. The present invention eliminates the heating for curing after application that is necessary in the conventional dry method, and the prior heating for drying the wet compositions used in conventional wet methods.

The present invention enables a maximal reduction in the complete cycle time for lining metallurgical vessels, enabling them to be maximally available, reducing the time for applying the composition that forms the working lining, reducing the time for forming or curing the composition, and reducing the time for form release / demolding. The forming times of the self-hardening composition of the invention, applied as a working lining, range from 15 minutes to 2 hours, these times being a notable reduction in comparison with the conventional wet and dry methods.

It is particularly easy to strip or clean the metallurgical vessel after casting when using the self-hardening composition of the method of the present invention, as all of the self-hardening material normally separates from the working lining in a single block. Because of this, cleaning prior to installing the metallurgical vessel is not usually necessary. Damage to the working lining is minimized relative to conventional methods. In the present invention, the forming of the working lining of the metallurgical vessel ensures the absence of inclusions caused by picking up refractory particles.

By employing different sorts and amounts of liquid additives and binders, it is possible to modulate the speed of the setting or forming reaction of the self-hardening composition used in the method of the present invention, as well as the mechanical resistance, density, and thermal conductivity of the working lining. For this reason, said self-hardening composition can be used over hot or cold working linings.

In the case of steelworks, hydrogen pick-up by the self-hardening composition used in the invention improves the quality of the steels produced. Lower hydrogen content has been observed in the first steel casting when using said composition to line metallurgical vessels for use in steelworks.

Generally speaking, the self-hardening composition used in the method of present invention makes it much easier to apply a working lining in a metallurgical vessel, as it is faster, cleaner and simpler to apply, and improves occupational safety and health conditions as well.

As such, a first aspect of the invention relates to a method (method of the invention) for lining metallurgical vessels used in foundries or steelworks with a self-hardening refractory composition, as defined in claim 1.
Further, the present invention relates to the method as defined in dependent claims 2 to 4.

In the present invention the term "dead-burning" or "sintering" refers to thermal processing at a temperature higher than that of calcination and lower than that of melting for a given substance or mineral, at which the porosity of the particles decreases and their density increases as a consequence of an increase in crystal size and the reduction of free surface energy.

The self-hardening refractory composition used in the method of the present invention further comprises at least one solid material selected from the list comprising calcined or uncalcined magnesite, calcined or uncalcined dolomite, calcined or uncalcined dunite, and calcined brucite.

In the present invention, the term "calcination" refers to the thermal processing through which a mineral loses its gaseous components and decomposes into its corresponding oxides.

In another preferred embodiment, the self-hardening refractory composition used in the method of the present invention comprises dead-burned magnesite.

In another preferred embodiment, in the refractory composition used in the method of the present invention , the granulated solid material has a grain size of less than 2 mm. The uncalcined minerals mentioned above must also have this grain size if they are to be incorporated into the self-hardening refractory composition used in the method of the invention.

The different sorts of liquid additives and binders make it possible to modulate the speed of the setting or forming reaction of the self-hardening composition used in the invention. Properties such as the mechanical resistance, density and thermal conductivity of the working lining thus produced may also be modified based on the type of material that said self-hardening composition comprises and the way it is applied. See the examples of the present invention.

Another characteristic that makes it possible to modify the final properties of the self-hardening composition and of the final working lining produced is the amount of liquid additives and binders employed, i.e. the percentage by weight of these liquid additives and binders, as shown in the examples of the present invention.

The liquid binder is of the inorganic sort and is a liquid sodium silicate. The percentage by weight of this liquid binder is between 4.5 and 6.5 % by weight with respect to the granulated solid material.

Alternatively, the liquid binder is of the organic sort and is a phenol/formaldehyde resin in a molar ratio of phenol/formaldehyde of between 0.4:1 to 0.6:1.

If the liquid binder is the organic one, the preferred proportion is between 3 and 5 % by weight with respect to the granulated solid material.
The liquid additive is glycerin-based ester. Preferably, it is selected from between diacetin and triacetin.

The liquid additive is present in a percentage of between 15 and 20 % by weight with respect to the liquid binder.

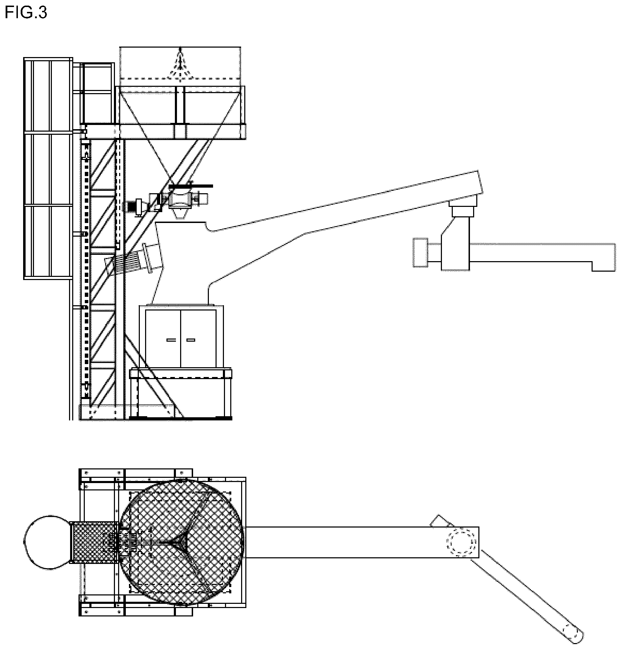

The method for producing the self-hardening refractory composition is mixing at room temperature. Normally a mixer such as the one shown in Figure 3 is used, into which each one of the components forming the self-hardening refractory composition of the invention is placed separately.

In the present invention the term "safety lining of the metallurgical vessel" refers to the lining that sits behind the working lining, i.e. if one removes the working lining from a metallurgical vessel, they will come up against the security lining.

In the present invention, "mold" is understood to mean a mold that is concentric to the safety walls of the metallurgical vessel, which limits the volume to be filled by the composition of the invention and which need not necessarily maintain the shape of the safety lining. The purpose of this mold is to create the thickness of the working lining, which can be different for each one of the walls thereof.

The mold mentioned in step b) may be an adjustable mold. In the present invention, "adjustable mold" is understood to mean a mold that can be adjusted around the safety walls of the metallurgical vessel to modify the thickness of the working lining.

Step d), removing the mold, is carried out once the self-hardening refractory composition has reached the required mechanical resistance, i.e. when the self-hardening refractory composition "has hardened".

### Summary of other aspects of the disclosure (outside of the subject-matter of the claims)

An aspect of the disclosure relates to a self-hardening refractory composition comprising:
- at least one granulated solid material selected from among:
   olivine,
   quartzite,
   alumina,
   a dead-burned mineral selected from the list comprising brucite, dolomite and magnesite,
- a liquid binder,
- a liquid additive, in a percentage by weight of more than 12 % with respect to the liquid binder, which is selected from between citric acid and esters, or any combination thereof.

In a preferred embodiment of the present disclosure, the self-hardening refractory further comprises at least one solid material selected from the list comprising calcined or uncalcined magnesite, calcined or uncalcined dolomite, calcined or uncalcined dunite, and calcined brucite.

In another preferred embodiment of the present disclosure, the self-hardening refractory composition described above comprises dead-burned magnesite.

In another preferred embodiment of the present disclosure, in the refractory composition described above, the granulated solid material has a grain size of less than 2 mm. The uncalcined minerals mentioned above must also have this grain size if they are to be incorporated into the self-hardening refractory composition of the disclosure.

In the present disclosure, the percentage by weight of the liquid binder is between 4.5 and 10% with respect to the granulated solid material, in a preferred embodiment.

On the one hand, in a preferred embodiment of the present disclosure, the liquid binder is of the inorganic sort, preferably being liquid sodium silicate. In this case the preferred proportion is between 4.5 and 6.5 % by weight with respect to the granulated solid material.

On the other hand, in another preferred embodiment of the present dislosure, the liquid binder is of the organic sort, preferably a phenolic resin, more preferably a phenol/formaldehyde resin in a molar ratio of phenol/formaldehyde of between 0.4:1 to 0.6:1.

If the liquid binder is organic, the preferred proportion is between 3 and 5 % by weight with respect to the granulated solid material.
In another preferred embodiment of the present disclosure, the liquid additive is glycerin-based ester. Preferably, it is selected from between diacetin and triacetin.

In another preferred embodiment of the present disclosure, the liquid additive is present in a percentage of between 12 and 20 % by weight with respect to the liquid binder. Preferably between 15 and 20 % by weight with respect to the liquid binder. In another aspect, the present disclosure relates to the use of the aforementioned composition to line metallurgical vessels used in foundries or steelworks. Preferably the vessels are tundishes, crucibles, runners, ladles, pots and vats.

Another preferred embodiment of the present disclosure relates to the use of the aforementioned composition to line working walls of metallurgical vessels used in foundries or steelworks.

Another preferred embodiment of the present disclosure relates to the use of the aforementioned composition when the metallurgical vessels are hot.

Lastly, another aspect of the disclosure relates to the method for lining metallurgical vessels used in foundries or steelworks with the aforementioned self-hardening refractory composition, comprising the following steps:
a) applying the self-hardening refractory composition to the floor of the metallurgical vessel,
b) placing a mold around the safety walls of the metallurgical vessel,
c) filling in the space between the mold and the safety lining with the self-hardening refractory composition,
d) removing the mold.

Throughout the description and the claims, the word "comprises" and variants thereof are not intended to exclude other technical characteristics, additions, components or steps. For those skilled in the art, other objects, advantages and characteristics of the invention may be deduced from both the description and the practical use of the invention. The following examples and drawings are provided by way of illustration, and are not meant to limit the present invention.

### BRIEF DESCRIPTION OF THE DRAWINGS

Figure 1: X-Ray Diffraction Spectrum of the granulated solid material obtained by sintering magnesite.
Figure 2: Thermal conductivity at 400, 700, 1000 and 1200 ºC.
Figure 3: An exemplary design of a mixer.
Figure 4: Applying the self-hardening refractory material to the floor of the tundish.
Figure 5: Filling in the space between the mold and the safety lining of the tundish with the self-hardening refractory composition.

### EXAMPLES

### Example 1: Characterization of the granulated solid material derived by dead-burning magnesite.

### a) Particle-size distribution

The solid material derived by dead-burning magnesite has a particle-size distribution of less than 2 mm, which was determined by means of a Mastersizer 2000 particle-size analyzer and the use of the appropriate set of sieves for particle sizes of more than 500 mm. The particle-size distribution used in these tests is the one shown below:

**Table 1. Possible and actual granulometric distribution of the exemplary granulated solid materials used to display the properties of this invention.**

| Grain size (mm) | % |
|---|---|
| >2 | 2.0 |
| 2-1 | 4.0 |
| 1 - 0.5 | 26.0 |
| 0.5 - 0.3 | 21.0 |
| 0.3 - 0.09 | 31.0 |
| 0.09 - 0.04 | 9.0 |
| < 0.04 | 7.0 |

### a) X-ray fluorescence chemical analysis

An x-ray fluorescence chemical analysis was carried out using a PHILIPS PW 2400 X-ray fluorescence spectrophotometer.

To be able to take measurements, the sample must be in the form of a 32 mm bead. Therefore, the PANalytical Peral X3 bead producer was used, whereby 0.5 - 0.6 g of ground sample was mixed with 4.5 - 5.4 g of flux mixture comprising lithium tetraborate and lithium metaborate (2:1), respectively.

The chemical composition with respect to the oxides of the majority and minority components present in the beaded sample is determined, in accordance with the protocol for the PHILIPS PW 2400 X-ray fluorescence system.

The chemical composition that was found is shown below:

**Table 2. Chemical composition of the presented example, determined in the form of metal oxides by means of X-ray fluorescence spectroscopy.**

| Chemical Analysis | Content (% by weight) |
|---|---|
| SiO₂ | 3.4 |
| CaO | 7.0 |
| Fe₂O₃, Al₂O₃ | 3.3 |
| MgO | 86.1 |
| L.O.I. (1050 ºC) | 0.2 |

### b) Determining the mineralogical phases by X-ray diffraction

The diffractograms of the powdered samples were recorded in a Bruker D8 Advance X-ray diffractometer, equipped with a Kristalloflex K760 X-ray generator, using Cu Kαl radiation (λ=1.5417 Å), an increment of 2θ = 0.02° and 1 s/pitch, in an interval of 2θ from 2º to 40º.

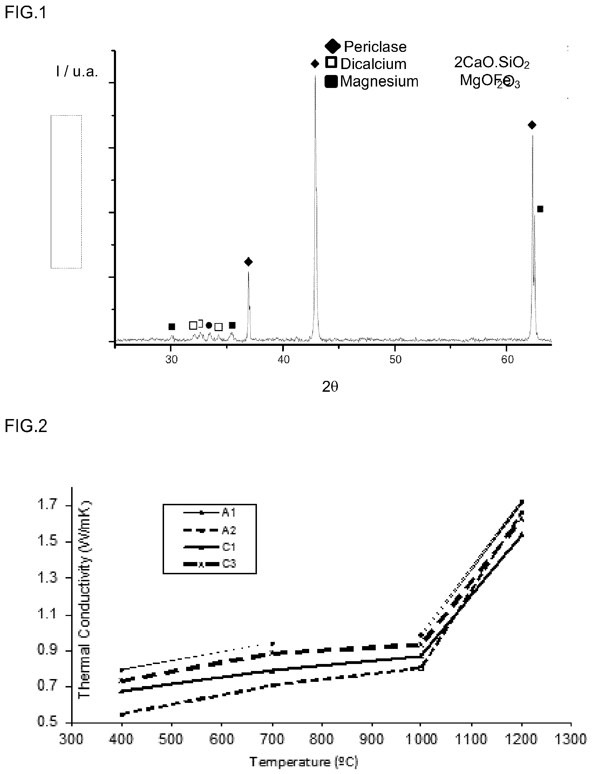

Figure 1 shows a typical X-ray diffractogram obtained from the granulated solid material obtained by dead-burning magnesite. This spectrum indicates that the mineralogical phases present are mainly Periclase, Dicalcium silicate and Magnesium ferrite.

**Table 3. Mineralogical composition of the example presented in this invention, determined by means of X-ray diffraction.**

| Mineralogical Phases | % |
|---|---|
| MgO (Periclase) | 83.0 |
| Dicalcium Silicate | 11.0 |
| Magnesium Ferrite | 6.0 |

In the self-hardening composition of the invention, the inorganic liquid binder could cause variation in the mineralogical phases with respect to the granulated solid material. However, the amount of inorganic liquid binder added with respect to the granulated solid material in the composition is so insignificant that the mineralogical phases and the proportions thereof are unaffected.

### Example 2: Characterization of the properties of the self-hardening composition used in the method of the invention when the liquid binder is inorganic.

A series of test pieces of the self-hardening composition were prepared with the granulated solid materials as the base, the chemical composition of which, determined by X-ray fluorescence, is the one shown below: Three magnesium-rich materials were used to assess various characteristic parameters of this self-hardening composition:

**Table 4. Chemical composition of the materials employed to prepare the test pieces, determined in the form of metal oxides by means of X-ray fluorescence spectroscopy.**

| Composition (% by weight) | A | B | C |
|---|---|---|---|
| SiO₂ | 3.57 | 3.55 | 2.77 |
| CaO | 7.02 | 4.88 | 4.01 |
| Fe₂O₃ | 3.29 | 1.88 | 2.14 |
| Al₂O₃ | 0.49 | 0.61 | 0.52 |
| MgO | 85.45 | 88.24 | 90.22 |
| L.O.I. (1000 ºC) | 0.18 | 0.78 | 0.35 |

First, the granulated solid material is mixed with the liquid additive, vigorously kneading by hand for one minute. Next, the liquid sodium silicate is added as a liquid binder in a percentage by weight of 5 and 6 %, based on the weight of the granulated solid material, depending on the test specimen to be tested, and it is vigorously kneaded by hand for one minute. The amount of liquid additive is calculated based on the amount of liquid binder used.

The test pieces are formed using prism-shaped molds with a quadrangular base having inner dimensions of 16cm x 4cm x 4cm.

### a) Measurements of the mechanical resistance of the samples

The measurements of the 16cm x 4cm x 4cm test pieces are tested in order to assess how they break under the impact of a "weight" with a mass of 64.2 g (a metal weight), which falls from a distance of 80 cm onto the face having a 16cm x 4cm surface, at a distance of 3 cm from the short edge of the prism (0.5 J of potential energy).

A1 and A2 and B1 and B2 differ from one another in terms of the compression of the self-hardening material, wherein (2) indicates non-compressed material.

**Table 5. Properties of the test pieces in conditions of compression (1) and non-compression (2).**

| | A1 | A2 | B1 | B2 |
|---|---|---|---|---|
| | Liquid binder | Liquid binder | Liquid binder | Liquid binder |
| | Liquid sodium silicate (5 %) | Liquid sodium silicate (5 %) | Liquid sodium silicate (6 %) | Liquid sodium silicate (6 %) |
| Thermal conductivity at 1200 ºC | 1.720 | 1.660 | 1.466 | |
| Density (g/cm³) | 1.80 | 1.55 | 1.70 | 1.51 |
| Porosity (g/cm³) | | 0.25 | | 0.19 |
| % Porosity (%) | | 13.89 | | 11.18 |

Mechanical resistance is assessed using the aforementioned method, giving values from 0 to 4 such that in Table 6 each value represents:
0: tested test specimen is unaffected.
1: cracking appears but the test specimen does not separate into two parts.
2: the test specimen separates into two fragments.
3: the test specimen separates into 3 or more distinct fragments.
4: the test specimen "shatters", at least in the area of the weight's impact.

**Table 6. Comparison of the mechanical resistance obtained for the test pieces based on the percentage of liquid additive for two of the materials of this invention in conditions of compression (1) and non-compression (2).**

| Mechanical resistance | A1 | A2 | B1 | B2 |
|---|---|---|---|---|
| | Liquid binder | Liquid binder | Liquid binder | Liquid binder |
| | Liquid sodium silicate (5 % by weight) | Liquid sodium silicate (5 % by weight) | Liquid sodium silicate (6 % by weight) | Liquid sodium silicate (6 % by weight) |
| Liquid additive Glycerol ester (8 %) | 2 | 3 | 3 | 4 |
| Liquid additive Glycerol ester (10 %) | 1 | 3 | 2 | 4 |
| Liquid additive Glycerol ester (12 %) | 1 | 2 | 2 | 3.5 |
| Liquid additive Glycerol ester (18 %) | 0-1 | 2 | 1 | 2 |

Table 6 evaluates the degree of resistance on a scale of 0 to 4, the number "0" indicating the highest degree of resistance. Table 6 shows an increase in the mechanical resistance of the test pieces as the percentage of liquid additive is increased without increasing the amount of liquid binder. The binder and additive content is minimal, a condition that is highly suitable for steel quality, and improves cleaning thereof.

Mechanical resistance is improved in the present invention by using a low liquid-binder content (liquid sodium silicate) using dosages of liquid additives (glycerol ester) of more than 12 % based on the amount of binder (% by weight). In accordance with any of the attached Tables, the appropriate amount is 5 % or 6 %.

The degree of compression of the material, as is to be expected, also increases the mechanical resistance of the test pieces in all cases. Thus, the mechanical resistance of these materials may be regulated on site to varying degrees by means of manual compression (ramming), or compression via vibration.

### b) Reaction speed assessment

**Table 7. Composition of the test pieces in conditions of compression (1) and non-compression (2).**

| Composition (% by weight) | A1 | A2 | A1 | A2 | B1 | B2 |
|---|---|---|---|---|---|---|
| SiO₂ | 3.57 | 3.57 | 3.57 | 3.57 | 3.55 | 3.55 |
| CaO | 7.02 | 7.02 | 7.02 | 7.02 | 4.88 | 4.88 |
| Fe₂O₃ | 3.29 | 3.29 | 3.29 | 3.29 | 1.88 | 1.88 |
| Al₂O₃ | 0.49 | 0.49 | 0.49 | 0.49 | 0.61 | 0.61 |
| MgO | 85.45 | 85.4 5 | 85.4 5 | 85.4 5 | 88.2 4 | 88.24 |
| L.O.I. (1000 ºC) | 0.18 | 0.18 | 0.18 | 0.18 | 0.78 | 0.78 |
| Liquid binder Liquid sodium silicate (%) | 5 | 5 | 5 | 5 | 6 | 6 |
| Liquid additive Glycerol ester | 1 | 1 | 2 | 2 | 1 | 1 |

The liquid additive is a glycerol ester, selected form the list comprising diacetin, triacetin or a combination thereof.

As shown in Table 8, the reaction speed may be regulated by employing various liquid additives (1 and 2), various mixtures of diacetin and triacetin, for a single given material (A).

**Table 8. Comparison of the hardening speed of the test pieces based on the type and percentage of liquid additive and binder.**

| Hardening time (min) | A1 | A2 | A1 | A2 | B1 | B2 |
|---|---|---|---|---|---|---|
| | Liquid binder | Liquid binder | Liquid binder | Liquid binder | Liquid binder | Liquid binder |
| | Liquid sodium silicate (5 % by weight) | Liquid sodium silicate (5% by weight) | Liquid sodium silicate (5 % by weight) | Liquid sodium silicate (5% by weight) | Liquid sodium silicate (6 % by weight) | Liquid sodium silicate (6% by weight) |
| | Liquid additive 1 | Liquid additive 1 | Liquid additive 2 | Liquid additive 2 | Liquid additive 1 | Liquid additive 1 |
| Liquid additive Glycerol ester (8 %) | 45 | 60 | 60 | 120 | 120 | 200 |
| Liquid additive Glycerol ester (10 %) | 35 | 60 | 60 | 110 | 120 | 170 |
| Liquid additive Glycerol ester (12%) | 25 | 40 | 55 | 90 | 100 | 120 |
| Liquid additive Glycerol ester (18 %) | 15 | 35 | 45 | 70 | 75 | 150 |

The hardening time is defined in the present invention as the time needed for the mixture of granulated solid material + liquid additive + liquid binder to become hard enough to prevent a sharp-tipped piece of metal bearing a normal amount of effort from penetrating. It also corresponds to the moment at which the material may be taken out of the form without cracks forming, i.e. the moment at which the consistency of the material is suitable for form removal / demolding .

Table 8 includes the comparison of the reaction speed obtained for two different liquid additives (1 and 2) for one of the granulated solid materials (material A). Liquid additive 1 is the fastest catalyst of the hardering reaction, and is also used to assess or measure mechanical resistance. Liquid additive 2 is a liquid additive that offers a somewhat slower acceleration of the hardering of the liquid binder itself.

There is also the possibility of regulating the reaction speed by using different concentrations of a single given liquid additive, as may be seen in Table 8. Concentrations from 8 to 18 % are displayed (based on the liquid binder content). For a single given material and a single given additive, times drop from 45 minutes to 15 minutes, for example (material A with liquid additive 1, Table 8), although this decrease in hardering times may be proportionally lower for other refractory materials (see material B in Table 8, for example), and also depending on the catalyzing liquid additive employed (material A in Table 8, with liquid additive 2).

The reaction speed is also different (and therefore may be regulated) depending on compression. The greater the compression, the higher the hardering speed.

### c) Thermal conductivity measurements

To carry out these studies, the test pieces were analyzed according to current legislation (UNE-EN 993-15) and the measurements were carried out at four temperature levels, 400, 700, 1000 and 1200 ºC, as dictated by the standard.

**Table 9. Composition of the test pieces in conditions of compression (1) and non-compression (2).**

| Composition (% by weight) | A1 | A2 | B1 | C1 | C3 |
|---|---|---|---|---|---|
| SiO₂ | 3.57 | 3.57 | 3.55 | 2.77 | 3.22 |
| CaO | 7.02 | 7.02 | 4.88 | 4.01 | 5.81 |
| Fe₂O₃ | 3.29 | 3.29 | 1.88 | 2.14 | 2.83 |
| Al₂O₃ | 0.49 | 0.49 | 0.61 | 0.52 | 0.50 |
| MgO | 85.45 | 85.45 | 88.24 | 90.22 | 87.4 |
| L.O.I. (1000 ºC) | 0.18 | 0.18 | 0.78 | 0.35 | 0.24 |
| Liquid binder Liquid sodium silicate (%) | 5 | 5 | 6 | 5 | 5 |
| Liquid additive Glycerol ester (1) (15 % by weight with respect to the liquid binder) | 0.75 | 0.75 | 0.9 | 0.75 | 0.75 |
| Density (g/cm³) | 1.81 | 1.54 | 1.67 | 1.76 | 1.79 |

Where C3=50% of A1 + 50% of C1, i.e. the sample is made up of 50% of A1 and 50% of C1.

Table 10 shows thermal conductivity measured over the test pieces in accordance with said standard for the different granulated solid material compositions, formed using liquid additive 1 (gycerol ester) and the inorganic liquid binder (liquid sodium silicate).

Furthermore, Table 10 shows an example for comparing the thermal conductivity of a mixture of two of the granulated solid materials at the four study temperatures (400, 700, 1000 and 1200 ºC). The material in the example is a typical refractory lining material that is representative of the classic Dry Vibe dry lining system (see, for example, patent WO9117969). This system must be heated in order to be formed and to be hardened.

**Table 10. Thermal conductivity (W/mK) obtained at various temperatures for the test pieces and a comparative example of "dry lining" material.**

| Thermal conductivity (W/mK) | A1 | A2 | B1 | C1 | C3 | Comparative Example 1 Dry Lining (Dry Vibe) |
|---|---|---|---|---|---|---|
| At 400 ºC | 0.792 | 0.550 | 0.917 | 0.676 | 0.746 | 0.987 |
| At 700 ºC | 0.938 | 0.707 | 0.887 | 0.788 | 0.872 | 1.092 |
| At 1000 ºC | 0.986 | 0.803 | 1.152 | 0.870 | 0.940 | 1.123 |
| At 1200 ºC | 1.720 | 1.660 | 1.466 | 1.572 | 1.642 | 1.744 |

The chemical composition of C1, with a higher MgO content and less presence of Fe₂O₃ and/or SiO₂ fluxes, has greater thermal conductivity than A1 .C3, which is an intermediate composition between A1 and C1, has, as is to be expected, intermediate thermal conductivity, with a value located between the values obtained for A1 and C1.

The material with the lowest thermal conductivity is material B1, which is a material that has greater intragranular porosity and fewer fluxes in comparison with material A1. In this case its porosity determines its lower thermal conductivity.

### d) Regulating the density of the final applied refractory product:

The ability to compress the material to a greater or lesser degree also makes it possible to respectively increase or reduce the density of the refractory wall produced as a coating (as may be seen in Tables 9 and 10). It may be concluded that the reduction in density and in thermal conductivity is associated with an increase in intergranular porosity.

In general, for the steelmaker this means a reduction in the specific consumption of refractory material (kg/t of steel produced), and therefore means an increase in the efficiency of the metallurgical vessel.

### Example 3: Characterization of the properties of the self-hardening composition used in the method of the invention when the liquid binder is organic.

The solid granulated materials may be formed with an organic binder such as phenolic resin.

**Table 11: Composition of the test pieces in conditions of compression (1) and non-compression (2).**

| Composition (% by weight) | D1 | D2 |
|---|---|---|
| SiO₂ | 3.57 | 3.57 |
| CaO | 7.02 | 7.02 |
| Fe₂O₃ | 3.29 | 3.29 |
| Al₂O₃ | 0.49 | 0.49 |
| MgO | 85.45 | 85.45 |
| L.O.I. (1000 ºC) | 0.18 | 0.18 |
| Liquid binder Phenol/formaldehyde resin | 3.8 % by weight with respect to the granulated solid material | 3.8 % by weight with respect to the granulated solid material |
| Liquid additive Glycerol ester (1) | 18 % by weight with respect to the liquid binder | 18 % by weight with respect to the liquid binder |

**Table 12. Properties of the test pieces in conditions of compression (1) and non-compression (2).**

| Properties | D1 | D2 |
|---|---|---|
| Mechanical resistance | 0-1 | 1 |
| Setting time (min) | 10 | 20 |
| Thermal conductivity at 1200 ºC | 1.74 | 1.70 |
| Density (g/cm³) | 1.90 | 1.60 |
| Porosity (g/cm³) | | 0.30 |
| % Porosity | | 15.79 |

The test pieces tested with phenol/formaldehyde resin have slightly higher density and conductivity than those found for material A (See Table 8).

On the other hand, the test pieces tested with phenol/formaldehyde resin show similar or even better mechanical resistance, and a reduction in hardening time, from 35 to 20 minutes for the non-compressed material A2, and 15 to 10 minutes for the compressed material A1 (See Table 8).

### Example 4: Application of the method for lining of the invention to a tundish.

The tests were carried out with tundishes with both the open nozzle and submerged nozzle systems. This type of tundish comprises an insulating layer, a permanent or safety layer made up of brick or refractory concrete, and a working lining layer that is in direct contact with the molten steel, which inevitably deteriorates with use, and must be replaced fairly often.

To replace the working lining of the tundishes with the self-hardening refractory composition of the invention described in example 2, sample type A, a mixer like the one in Figure 3 was used. Along the worm of the mixer, abrasion-reinforced paddles mixed the calcined magnesite, the liquid binder (liquid sodium silicate at 5.4 %) and the liquid additive (glycerol ester at 15 %, based on the amount of sodium silicate), which were placed in the mixer separately.

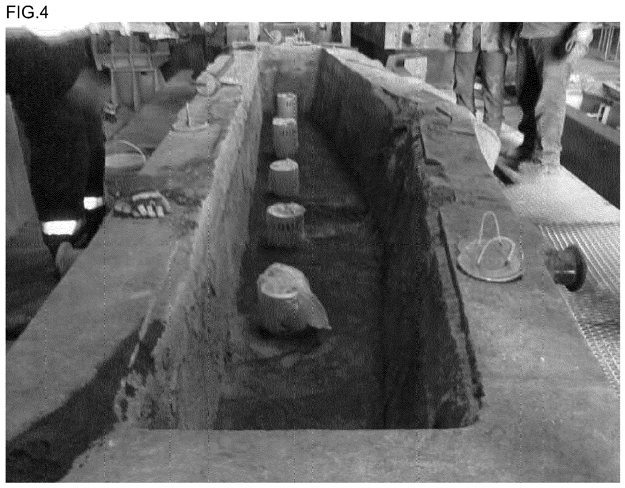

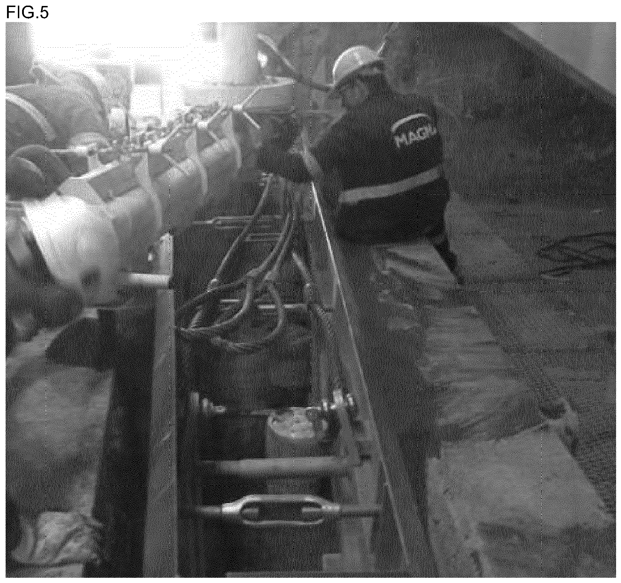

The method began by lining the floor of the tundishes, as may be seen in Figure 4. Then, the mold, which is adjustable in order to modify the thickness of the lining, was put in place, and the space between the form and the safety lining was filled in. See Figure 5. The average time used to line a tundish 6.2 m long x 0.95 m high, dimensions involving a capacity of 22-26 t of steel, approximately 3.5 m³, was between 23 and 28 minutes, using between 1800 and 2200 kg of the self-hardening refractory composition of the invention. The waiting times of this forming at room temperature ranged from 15 minutes to 2 hours in different tests. Form removal/ Demolding after casting was quite easy, separating from the safety lining in a single block in just 30 minutes.

In all cases, for continuous casting started up both cold and with preheating of the tundishes, the properties of the working lining produced with the self-hardening refractory composition of the invention were unaffected.

### Example 5: Comparative study between the linings of the state of the art and the invention, for tundishes having similar characteristics.

| | Cold Plates | Spraying or gunning | Dry | Invention |
|---|---|---|---|---|
| Necessary equipment | None | Complex | Medium | Medium |
| Drier needed | | Yes | Yes (Drying and vibration to carry out forming) | No |
| Energy cost | Low | High (T=700 ºC) | Medium (T=250 ºC) | None (Room temp.) |
| Drying time | No drying | Long (5-6 hours) | Medium (2 hours) | No drying |
| Maximum time to build lining and clean lining-applying machine | Long | Medium (3 hours) | Short (1 hour) | Short (1 hour) |
| Number of casts before having to replace the lining for the same thickness (7-8 cm) of the tested lining materials | | Up to 35 | Up to 35 | Up to 45-55* |
| Risk of inclusions | | Yes | None | None |

| | | | | |
|---|---|---|---|---|
| * It is difficult to compare the number of casts before having to replace the lining because these data are obtained from experiences at steelworks, corresponding to work carried out as detailed in example 4, and the same working conditions are not always maintained due to new needs on the part of the steelworks, for example the same thickness of the lining. However, it is true that the self-hardening refractory composition of the invention has indeed been proven to allow for an increase in the number of casts with respect to the product that was being used up till then at each steelworks. | | | | |

## Claims

1. A method for lining metallurgical vessels used in foundries or steelworks with a self-hardening refractory composition, comprising the following steps:
a) applying the self-hardening refractory composition to the floor of the metallurgical vessel,
b) placing a mold around the safety walls of the metallurgical vessel;
c) filling in the space between the mold and the safety lining with the self-hardening refractory composition,
and d) removing the mold,
wherein the self-hardening refractory composition comprises:
• at least one granulated solid material selected from among:
olivine,
quartzite,
alumina, and
a dead-burned mineral selected from the list comprising brucite, dolomite and magnesite, preferably the granulated solid material is a dead-burned magnesite,
• a liquid binder of inorganic nature, wherein the liquid binder of inorganic nature is liquid sodium silicate in a proportion of between 4.5 and 6.5 % by weight with respect to the granulated solid material, or a liquid binder of organic nature, wherein the liquid binder of organic nature is a phenol/formaldehyde resin in a molar ratio of phenol/formaldehyde of between 0.4:1 to 0.6:1, and
• a liquid additive, in a percentage by weight of between 15 and 20 % by weight with respect to the liquid binder, which is a glycerin-based ester;
and wherein the self-hardening refractory composition is mixing at room temperature by means of a mixer, into which each one of the components forming the composition is placed separately.

2. The method according to claim 1, wherein the self-hardening refractory composition used in step (a) or (c) further comprises at least one granulated solid material selected from the list comprising calcined or uncalcined magnesite, calcined or uncalcined dolomite, calcined or uncalcined dunite, and calcined brucite.

3. The method according to any of claims 1 or 2, wherein the granulated solid material of the self-hardening refractory composition used in step (a) or (c) has a grain size of less than 2 mm.

4. The method according to any of claims 1 or 3, wherein the glycerin-based ester is selected from between diacetin and triacetin.

## Patentansprüche

1. Verfahren zur Auskleidung metallurgischer Behälter, die in Gießereien oder Stahlwerken verwendet werden, mit einer selbsthärtenden feuerfesten Zusammensetzung, umfassend die folgenden Schritte:
a) Aufbringen der selbsthärtenden feuerfesten Zusammensetzung auf den Boden des metallurgischen Behälters,
b) Anbringen einer Form um die Sicherheitswände des metallurgischen Behälters herum;
c) Ausfüllen des Raums zwischen der Form und der Sicherheitsauskleidung mit der selbsthärtenden feuerfesten Zusammensetzung,
und d) Entfernen der Form,
wobei die selbsthärtende feuerfeste Zusammensetzung Folgendes umfasst:
• mindestens ein granuliertes Feststoffmaterial, ausgewählt aus:
Olivin,
Quarzit,
Aluminiumoxid und
ein totgebranntes Mineral, ausgewählt aus der Liste, die Brucit, Dolomit und Magnesit umfasst, wobei das granulierte Feststoffmaterial vorzugsweise ein totgebrannter Magnesit ist,
• ein flüssiges Bindemittel anorganischer Natur, wobei das flüssige Bindemittel anorganischer Natur flüssiges Natriumsilikat in einem Anteil von 4,5 bis 6,5 Gew.-%, bezogen auf das granulierte Feststoffmaterial, ist, oder ein flüssiges Bindemittel organischer Natur, wobei das flüssige Bindemittel organischer Natur ein Phenol/Formaldehyd-Harz in einem molaren Verhältnis von Phenol/Formaldehyd von 0,4:1 bis 0,6:1 ist, und
• einen flüssigen Zusatzstoff in einem Gewichtsprozentanteil zwischen 15 und 20 %, bezogen auf das flüssige Bindemittel, der ein Ester auf Glycerinbasis ist;
und wobei die selbsthärtende feuerfeste Zusammensetzung bei Raumtemperatur mittels eines Mischers gemischt wird, in den jede der Komponenten, die die Zusammensetzung bilden, separat gegeben wird.

2. Verfahren nach Anspruch 1, wobei die in Schritt (a) oder (c) verwendete selbsthärtende feuerfeste Zusammensetzung ferner mindestens ein granuliertes Feststoffmaterial umfasst, das aus der Liste ausgewählt ist, die kalzinierten oder nicht kalzinierten Magnesit, kalzinierten oder nicht kalzinierten Dolomit, kalzinierten oder nicht kalzinierten Dunit und kalzinierten Brucit umfasst.

3. Verfahren nach einem der Ansprüche 1 oder 2, wobei das granulierte Feststoffmaterial der in Schritt (a) oder (c) verwendeten selbsthärtenden feuerfesten Zusammensetzung eine Korngröße von weniger als 2 mm aufweist.

4. Verfahren nach einem der Ansprüche 1 oder 3, wobei der Ester auf Glycerinbasis zwischen Diacetin und Triacetin ausgewählt wird.

## Revendications

1. Procédé de revêtement de récipients métallurgiques utilisés dans les fonderies ou les aciéries avec une composition réfractaire autodurcissante, comprenant les étapes suivantes :
a) application de la composition réfractaire autodurcissante sur le fond du récipient métallurgique,
b) mise en place d'un moule autour des parois de sécurité du récipient métallurgique ;
c) remplissage de l'espace entre le moule et le revêtement de sécurité avec la composition réfractaire autodurcissante,
et d) retrait du moule,
dans lequel la composition réfractaire autodurcissante comprend :
• au moins un matériau solide granulé choisi parmi :
l'olivine,
le quartzite,
l'alumine, et
un minéral calciné à mort choisi dans la liste comprenant la brucite, la dolomite et la magnésite, de préférence le matériau solide granulé est une magnésite calcinée à mort,
• un liant liquide de nature inorganique, le liant liquide de nature inorganique étant du silicate de sodium liquide dans une proportion comprise entre 4,5 et 6,5 % en poids par rapport au matériau solide granulé, ou un liant liquide de nature organique, le liant liquide de nature organique étant une résine de phénol/formaldéhyde selon un rapport molaire de phénol/formaldéhyde compris entre 0,4:1 et 0,6:1, et
• un additif liquide, selon un pourcentage en poids compris entre 15 et 20 % en poids par rapport au liant liquide, qui est un ester à base de glycérine ;
et dans lequel la composition réfractaire autodurcissante est mélangée à température ambiante au moyen d'un mélangeur, dans lequel chacun des composants formant la composition est placé séparément.

2. Procédé selon la revendication 1, dans lequel la composition réfractaire autodurcissante utilisée à l'étape (a) ou (c) comprend en outre au moins un matériau solide granulé choisi dans la liste comprenant de la magnésite calcinée ou non calcinée, de la dolomite calcinée ou non calcinée, de la dunite calcinée ou non, et de la brucite calcinée.

3. Procédé selon l'une quelconque des revendications 1 ou 2, dans lequel le matériau solide granulé de la composition réfractaire autodurcissante utilisée à l'étape (a) ou (c) a une granulométrie inférieure à 2 mm.

4. Procédé selon l'une quelconque des revendications 1 ou 3, dans lequel l'ester à base de glycérine est choisi entre de la diacétine et de la triacétine.
